# EUROPEAN PATENT SPECIFICATION

(11) **EP 1 829 744 B1**
(45) Date of publication and mention of the grant of the patent: **20.08.2008**
(21) Application number: 04806392.9
(22) Date of filing: 20.12.2004
(51) Int. Cl.: B60R 1/06

(54) **FRAME COMPRISING A VIBRATION-DAMPING DEVICE, WHICH IS INTENDED FOR THE OUTSIDE REAR-VIEW MIRROR ASSEMBLY OF A MOTOR VEHICLE**
EINE SCHWINGUNGSDÄMPFUNGSVORRICHTUNG UMFASSENDER RAHMEN FÜR DIE AUSSENRÜCKSPIEGELANORDNUNG EINES KRAFTFAHRZEUGS
CHASSIS EQUIPE D'UN DISPOSITIF AMORTISSEUR DE VIBRATIONS UTILISE DANS UN ENSEMBLE RETROVISEUR EXTERIEUR D'UN VEHICULE AUTOMOBILE

(43) Date of publication of application: 05.09.2007
(73) Proprietor: Fico Mirrors, S.A., 08028 Barcelona (ES)
(72) Inventor: MENDOZA VICIOSO, José Casa "La Mima", E-08430 La Roca del Valles (ES); AYESTARAN VELAZQUEZ, Ismael, E-08225 Terrassa (ES)
(74) Representative: Gislon, Gabriele
(86) International application number: PCT/IB2004/004210
(87) International publication number: WO 2006/067536

(56) References cited:
- EP-A1- 0 192 549
- EP-A2- 0 294 031
- WO-A1-99/10201
- WO-A1-03/013908
- DE-A1- 3 344 539
- GB-A- 1 600 425

## Description

### Field of the Art

The present invention relates to a frame comprising a vibration-damping device which is intended for the outside rear-view mirror assembly of a motor vehicle, and more particularly to a frame which can be obtained by injection molding and integrates a damping device forming part of said vibration-damping device in a same part.

### Prior State of the Art

Outside rear-view mirrors for motor vehicles comprising a frame secured to the vehicle and a moving plate to which mirror is fixed are well known. The moving plate is connected to said frame by means of a kinematic knuckle-type joint providing it with a freedom of rotation in relation to two mutually perpendicular axes that are generally parallel to the reflecting surface of the mirror. Both axes cross one another at a point forming the center of both rotations and which is therefore immobile, the joining point for joining the moving plate to the support structure is therefore located in said center. The rear-view mirror generally includes an adjustment mechanism formed by actuation and movement transmission means, assembled in a case supported on the frame for example. The transmission means have moving elements connected to two points of the moving plate separated from the joining point. An activation of the mentioned actuation and transmission means selectively moves the connection points of the moving plate and thus provides it with a swiveling movement on said two co-ordinate axes for the purpose of selecting a position adjusted to the needs of a user.

The incorporation of a damping arrangement in the form of a metallic elastic clamp fixed to the frame by means of a screw or other joining means is known for the purpose of damping possible vibrations transmitted to the moving plate, which clamp acts by securing by pressure a tab such that it can slide, which tab projects out from the moving plate. This clamp is usually a standard part on the market, manufactured in stainless steel for springs, and can be assembled both in metal and plastic frames, whereas the tab forms part of the moving plate and is generally obtained by the injection molding of a plastic or thermoplastic material.

However, this vibration-damping device based on a metal clamp fixed to the frame has several drawbacks. Firstly, it has a relatively high economic cost, given that the clamp made of stainless steel for springs has a high cost and it further involves multiple components making the storage, logistic and assembly operations expensive. Furthermore, these multiple components and their assembly operation increase the risk of failures which may affect the reliability of the product. On the other hand, the frictional contact between the clamp and the tab can cause an unpleasant metallic nose, which normally forces the application of grease during the assembly. Finally, the different materials of which the multiple parts i.e., frame, clamp, screw, etc., are made makes the recycling of the assembly at the end of its useful life difficult.

Alternatively, utility model ES-A-1054454 discloses a vibration-damping device incorporating a single damping arm which forms part of a part forming the frame, and has a free end in permanent contact with a surface of a flexible tab projecting out from the moving plate. However, although this contact on a single side of the tab can neutralize most vibration frequencies, it favors some harmonics translating into a deficient vibration damping. The material normally used for manufacturing the moving plate furthermore does not ensure the elasticity and becomes unstable over time, especially at under medium or high temperatures. For this reason, the result can be an insufficient damping, which can even be nil, after a certain time of exposure of the tab to climatic factors.

WO 03/013908 discloses an adjustable vehicle mirror mechanism comprising a mirror attached to a mirror support supported on a mirror housing by a ball-type pivot joint. A cup shaped body of plastics attached to the mirror housing defines a substantially part spherical inner concave surface with a first radius of curvature. Inside the mentioned cup shaped body are integrally moulded four first tongues, each defining a substantially part spherical convex surface with a second radius of curvature lesser than the first radius of curvature. Both part spherical concave and convex surfaces have essentially the center at the pivot point. The mirror support comprises four second tongues, each having part spherical convex and concave surfaces facing the part spherical concave surface of the cup shaped body and the part spherical convex surface of a corresponding first tongue, respectively. The second tongues are arranged to move between the cup shaped body and the first tongues without contact. A spring clip engages each first tongue and the cup-shaped body to draw them together so as to engage the corresponding second tongue therebetween to provide a frictional load on the movement of the mirror support. The problem with this prior art document is that the first tongues integrally moulded with the plastic cup-shaped body are not able by themselves to provide the frictional force on the second tongues, thereby additional metal spring clips are needed.

### Disclosure of the Invention

The present invention contributes to solving the previous and other drawbacks by providing a frame comprising a vibration-damping device according to claim 1, which is intended for the outside rear-view mirror assembly of a motor vehicle, said frame being of the type which is adapted to support a moving plate bearing at least one mirror, which plate is connected to the frame by means of a knuckle-type joint allowing a combined swiveling on two co-ordinate axes, where a tab projecting out from the moving plate is pressed such that it can slide through a damping arrangement joined to the frame for the purpose of damping vibrations. The frame of the present invention is **characterized in that** said damping arrangement comprises at least one pair of elastic arms which form part of the frame and form a single part therewith, said elastic arms being arranged in the form of a clamp in order to form a pressure contact against the opposing faces of said tab.

According to one embodiment, the mentioned elastic arms in the form of a clamp extend from the frame and have respective mutually opposite free ends separated by a distance less than a thickness of said tab. The frame is suitably configured so as to be obtained by injection molding, preferably of a plastic or thermoplastic material. This construction can cover most applications, given that currently about 80% of the support frames of rear-view mirrors of motor vehicles are carried out by molding a plastic material. The elasticity of the arms is determined by the thickness of their cross-section in combination with the features of the selected material. The arms of the clamp can thus have a substantially elastic behavior whereas the frame is substantially rigid, despite being of the same material.

The materials having suitable elasticity and climatic stability features for manufacturing the inventive frame include simple materials such as, for example, PA (polyamide), PP (polypropylene), PBT (polybutylene terephthalate), or POM (polyoxymethylene polyformaldehyde (polyacetal)); or any of the previous materials including a load of FG (fiberglass for example); or mixed materials such as for example, ABS + PC (acrylonitrile-butadiene-styrene + polycarbonate).

The frame of the present invention provides multiple advantages. The damping arrangement and the frame integrated in a single part provide an important economic saving due to the reduction of components and the subsequent elimination of the corresponding assembly operations. Furthermore, the general reliability of the rear-view mirror is thus increased as the risk of failure due to assembly defects is eliminated. Furthermore, possible metallic noises are thus prevented and the recycling is made easier to a great extent.

### Brief Description of the Drawings

The previous and other advantages and features shall be more fully understood from the following detailed description of an embodiment with reference to the attached drawings, in which:
Figure 1 shows a partially sectioned side elevational view of a generic frame comprising a vibration-damping device according to the closest state of the art, coupled to a moving plate bearing a mirror;
Figure 2 shows a partially sectioned side elevational view of a frame comprising a vibration-damping device according to an embodiment of the present invention, coupled to a moving plate bearing a mirror; and
Figure 3 shows a plan view of the frame of Figure 2.

### Detailed Description of an Embodiment

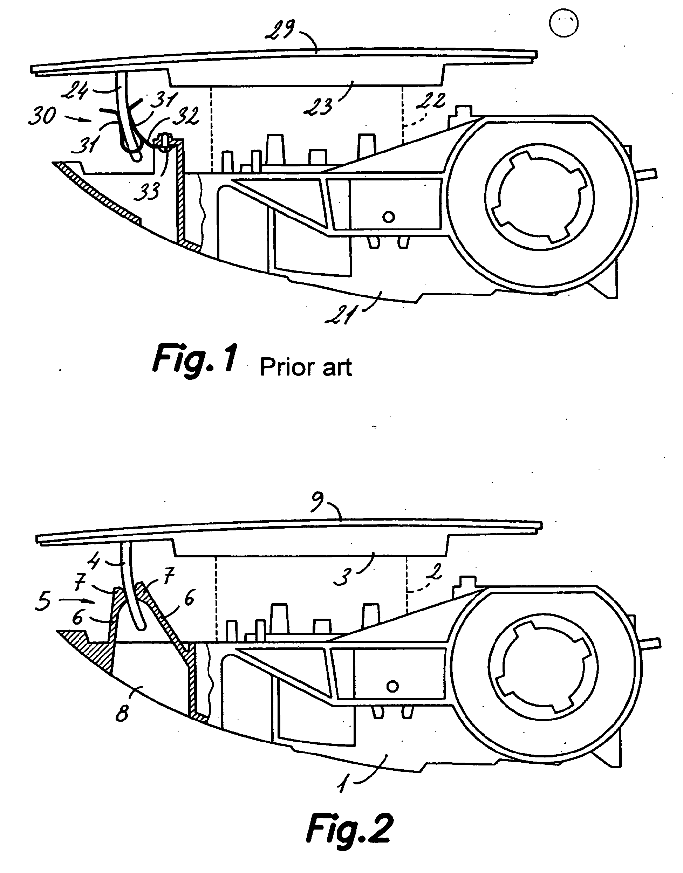

With reference to Figure 1, it shows a frame 21 comprising a vibration-damping device, which is intended for the outside rear-view mirror assembly of a motor vehicle, according to the state of the art. The mentioned frame 21 is adapted to support a moving plate 23 to which there is fixed at least one mirror 29. Said moving plate 23 is assembled by means of a knuckle-type joint allowing a combined swiveling of the moving plate 23 on two co-ordinate axes. A case is generally installed on the frame 21, which case houses an adjustment mechanism comprising movement transmission means connected to the moving plate 23 in order to vary its position. The case housing said adjustment mechanism and the mentioned knuckle-type joint are conventional and have been schematically shown as a whole by means of dotted lines 22 in Figure 1.

The moving plate 23 incorporates a tab 24 projecting out from a lower part of such plate opposite the frame 21 for the purpose of damping a possible vibration transmission from the frame 21 to the moving plate 23. Said tab 24 is adapted to be pressed such that it can slide in a damping arrangement 25 joined to the frame 1. In this frame of the state of the art, the mentioned damping arrangement 25 comprises an elastic clamp 30 manufactured from a sheet of stainless steel for springs. The mentioned clamp 30 comprises a par of arms 31 adapted to press against both faces of the tab 24 and an appendage 32 through which the clamp 30 is fixed to the frame 21 by means of a screw 33 or another equivalent joining means.

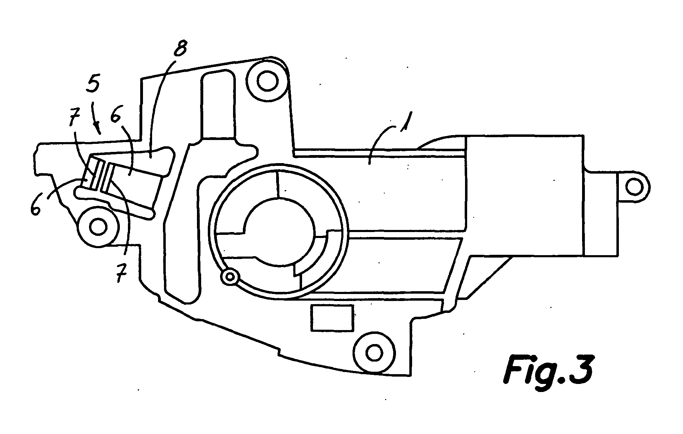

Figures 2 and 3 shows a frame 1 comprising a vibration-damping device, which is intended for the outside rear-view mirror assembly of a motor vehicle according to the present invention, which incorporates a new damping arrangement 5 designed to palliate some of the drawbacks of the metallic elastic clamp 30 of the state of the art, set forth above.

In a manner similar to the frame 21 of the state of the art described above in relation to Figure 1, the mentioned frame 1 according to the present invention is adapted to support a moving plate 3 bearing at least one mirror 9. This moving plate 3 is connected to the frame 1 by means of a knuckle-type joint allowing a combined swiveling of the moving plate 3 on two co-ordinate axes. Optionally, a case can be installed on the frame 1, which case houses a position-adjustment mechanism including movement transmission means connected to the moving plate in order to vary its position. The actuation of the mentioned movement transmission means can be any of the different types that are well known in the art of the sector. Given that the arrangement of the adjustment mechanism and of the mentioned knuckle-type joint is conventional and does not form part of the object of the present invention, its detailed description will be omitted and its representation will be jointly and schematically indicated by means of a case 2 in dotted lines in Figure 2.

It must only be stated, by way of an illustrative example, that the actuation of the position-adjustment mechanism can be carried out by one or two electric motors included in the mentioned case 2, or by one or more electric motors located in a separate place and connected by means of a transmission by flexible cables to the means of case 2, or by manually operated controls connected to the means of case 2 by flexible cables or another movement transmission. However, the adjustment mechanism is not essential because rear-view mirror assemblies are also known in which such adjustment mechanism has been omitted and in which the position of the moving plate 3 is directly varied manually. This is the case, for example, of relatively large rear-view mirrors for vans and industrial vehicles in which the moving plate is simply supported by the knuckle-type joint, in which the vibration-damping device can be a determining factor. Therefore, the case 2 shown schematically in dotted lines of Figure 2 is meant to indicate both a simple knuckle-type joint and a knuckle-type joint in combination with an adjustment mechanism.

Continuing with Figures 2 and 3, a tab 4, which projects out from a part of the moving plate 3 opposite the frame 1, is pressed such that it can slide through a damping arrangement 5 joined to the frame 1 object of the present invention. This damping arrangement 5 comprises at least one pair of elastic arms 6 arranged in the form of a clamp in order to form a pressure contact against the opposing faces of said tab 4. It must be emphasized that the mentioned elastic arms 6 form part of the frame 1, i.e. the frame 1 and the elastic arms 6 are formed from a single part, which is suitable configured so as to be obtained by injection molding, preferably of plastic or thermoplastic material. The elastic arms 6 extend from the frame 1 to the moving plate 3 and have respective mutually opposite free ends 7 separated by a distance less than a thickness of said tab 4, such that the tab 4 causes a slight elastic deformation of the elastic arms 6 which ensures a pressure contact. The degree of elasticity of the elastic arms 6 can be suitably adapted to the requirements of its vibration-damping function by selecting a cross-sectional area of the elastic arms 6 according to several features of the material of the part forming the frame 1. The tab has a curved configuration with a center of curvature substantially located at a crosspoint of the mentioned two co-ordinate axes, i.e., in the swiveling center of the knuckle-type joint.

According to the embodiment shown in Figures 2 and 3, the elastic arms 6 arise from inner walls of a through hole 8 from one side of the frame 1 to the other and are inclined in opposite directions converging towards said free ends 7, which ends gave opposite projections defining respective contact surfaces with the tab 4.

A person skilled in the art can introduce variations and modifications in the shown and described embodiment without departing from the scope of the present invention as it is defined in the attached claims.

## Claims

1. A frame comprising a vibration-damping device which is intended for the outside rear-view mirror assembly of a motor vehicle, said frame (1) being of the type adapted to support a moving plate (3) bearing at least one mirror (9) and connected to the frame (1) by means of a knuckle-type joint allowing a combined swiveling on two co-ordinate axes, in which a tab (4) which projects out from the moving plate (3) is pressed such that it can slide through a damping arrangement (5) joined to the frame (1) for the purpose of damping vibrations, **characterized in that** said damping arrangement (5) comprises at least one pair of elastic arms (6) which form part of the frame (1) and form a single part therewith, said elastic arms (6) being arranged in the form of a clamp in order to form a pressure contact against the opposing faces of said tab (4), said for (4) causing a slight elastic deformation of the elastic arms (6) which ensures a pressure contact.

2. A frame according to claim 1, **characterized in that** said elastic arms (6) extend from the frame (1) and have respective mutually opposite free ends (7) separated by a distance less than a thickness of said tab (4).

3. A frame according to claim 2, **characterized in that** said elastic arms (6) are inclined in opposite directions converging towards said free ends (7).

4. A frame according to claim 3, **characterized in that** the free ends (7) of the elastic arms (6) have opposite projections defining respective contact surfaces with the tab (4).

5. A frame according to claim 3, **characterized in that** the elastic arms (6) arise from inner walls of a hole (8) of the frame (1).

6. A frame according to claim 5, **characterized in that** said hole (8) is a through hole from one side of the frame (1) to the other.

7. A frame according to claim 1, **characterized in that** said elastic arms (6) have a cross-sectional area selected according to several features of the material of the part forming the frame (1) to determine an elasticity of the elastic arms (6) adapted for damping vibrations.

8. A frame according to claim 1, **characterized in that** it comprises a support for a case (2) housing a position-adjustment mechanism connected to the moving plate (3), said mechanism being actuated in order to vary the position of the moving plate (3) in relation to said co-ordinate axes.

9. A frame according to any one of the previous claims, **characterized in that** it is configured to be obtained by injection molding.

10. A frame according to any one of claims 1 to 8, **characterized in that** it is configured to be obtained by the injection molding of a plastic or thermoplastic material.

## Patentansprüche

1. Rahmen mit einer Schwingungsdämpfungsvorrichtung, der für den Außenrückspiegelaufbau eines Kraftfahrzeugs vorgesehen ist, wobei der Rahmen (1) eine bewegliche Platte (3) stützt, die mindestens einen Spiegel (9) trägt und mit dem Rahmen (1) über eine Gelenkverbindung verbunden ist, mit der eine kombinierte Schwenkbewegung auf zwei Koordinatenachsen ermöglicht wird, wobei eine Zunge (4), die von der beweglichen Platte (3) hervorsteht, so zusammengedrückt wird, dass sie durch eine Dämpfungsanordnung (5) gleiten kann, die mit dem Rahmen (1) zwecks Schwingungsdämpfung verbunden ist, **dadurch gekennzeichnet, dass** die Dämpfungsanordnung (5) mindestens ein Paar elastischer Arme (6) aufweist, die Teil des Rahmens (1) bilden und mit diesem einstückig ausgebildet sind, wobei die elastischen Arme (6) in Form einer Klammer angeordnet sind, um gegen die gegenüber liegenden Flächen der Zunge (4) einen Druckkontakt bilden zu können, wobei die Zunge (4) eine leichte elastische Verformung der elastischen Arme (6) hervorruft, wodurch ein Druckkontakt sichergestellt wird.

2. Rahmen nach Anspruch 1, **dadurch gekennzeichnet, dass** die elastischen Arme (6) vom Rahmen (1) ausgehen und jeweils einander gegenüber liegende freie Enden (7) aufweisen, die voneinander durch einen geringeren Abstand als der Dicke der Zunge (4) getrennt sind.

3. Rahmen nach Anspruch 2, **dadurch gekennzeichnet, dass** die elastischen Arme (6) in gegenläufiger Richtung geneigt sind und auf die freien Enden (7) zulaufen.

4. Rahmen nach Anspruch 3, **dadurch gekennzeichnet, dass** die freien Enden (7) der elastischen Arme (6) gegenüber liegende Vorsprünge aufweisen, durch die jeweilige Kontaktflächen mit der Zunge (4) definiert sind.

5. Rahmen nach Anspruch 3, **dadurch gekennzeichnet, dass** die elastischen Arme (6) von Innenwänden eines Lochs (8) des Rahmens (1) ausgehen.

6. Rahmen nach Anspruch 5, **dadurch gekennzeichnet, dass** das Loch (8) ein Durchgangsloch von einer Seite des Rahmens (1) zur anderen Seite ist.

7. Rahmen nach Anspruch 1, **dadurch gekennzeichnet, dass** die elastischen Arme (6) einen Querschnittsbereich aufweisen, der je nach mehreren Merkmalen des Materials des den Rahmen (1) bildenden Teils ausgewählt sind, um so eine zur Schwingungsdämpfung geeignete Elastizität der elastischen Arme (6) zu bestimmen.

8. Rahmen nach Anspruch 1, **dadurch gekennzeichnet, dass** er einen Träger für ein Gehäuse (2) aufweist, in dem ein mit der beweglichen Platte (3) verbundener Lageverstellungsmechanismus untergebracht ist, wobei der Mechanismus betätigt wird, um die Stellung der beweglichen Platte (3) zu den Koordinatenachsen zu variieren.

9. Rahmen nach einem der vorhergehenden Ansprüche, **dadurch gekennzeichnet, dass** er so ausgeführt ist, dass er durch Spritzgießen herstellbar ist.

10. Rahmen nach einem der Ansprüche 1 bis 8, **dadurch gekennzeichnet, dass** er so ausgeführt ist, dass er durch Spritzgießen eines Kunststoff- oder Thermoplastmaterials herstellbar ist.

## Revendications

1. Un châssis comportant un dispositif pour amortir les vibrations qui est destiné à l'assemblage du rétroviseur d'une voiture, ce châssis (1) étant du genre adapté pour supporter une plaque mouvante (3) sur laquelle se trouve au moins un miroir (9) et reliée au châssis (1) au moyen d'un joint articulé permettant un pivotement combiné sur deux axes coordonnés dans lesquels un onglet (4) qui ressort de la plaque mouvante (3) est pressé de sorte qu'il puisse glisser à travers le système d'amortissement (5) relié au châssis (1) à l'effet d'amortir les vibrations, **caractérisé en ce que** le système d'amortissement (5) comprend au moins une paire de bras élastiques (6) qui font partie du châssis (1) et forme une seule pièce avec lui, ces bras élastiques (6) étant agencés sous forme d'un crampon afin d'entraîner un contact par pression contre les faces opposées de cet onglet (4), cet onglet (4) provoquant une légère déformation élastique des bras élastiques (6) assurant un contact par pression.

2. Un châssis conformément à la revendication 1, **caractérisé en ce que** ces bras élastiques (6) s'étendent à partir du châssis (1) et ont des extrémités libres (7) respectives se faisant face mutuellement séparées par un écart inférieur à la grosseur de cet onglet (4).

3. Un châssis conformément à la revendication 2, **caractérisé en ce que** ces bras élastiques (6) sont inclinés dans des directions opposées convergeant vers ces extrémités libres (7).

4. Un châssis conformément à la revendication 3, **caractérisée en ce que** les extrémités libres (7) des bras élastiques (6) ont des saillies se faisant face définissant des surfaces de contact respectives avec l'onglet (4).

5. Un châssis conformément à la revendication 3, **caractérisée en ce que** les bras élastiques (6) s'élèvent depuis les parois internes d'un trou (8) du châssis (1).

6. Un châssis conformément à la revendication 5, **caractérisé en ce que** ce trou (8) est un trou traversant d'un côté du châssis (1) à l'autre.

7. Un châssis conformément à la revendication 1, **caractérisé en ce que** ces bras élastiques (6) ont une région en coupe transversale choisie selon différentes caractéristiques du matériau de la partie formant le châssis (1) pour déterminer une élasticité des bras élastiques (6) adaptée pour amortir les vibrations.

8. Un châssis conformément à la revendication 1, **caractérisée en ce qu'**il comporte un support pour un bâti (2) logeant un mécanisme de position-réglage relié à la plaque mobile (3), ce mécanisme étant actionné pour changer la position de la plaque mobile (3) par rapport à ces axes coordonnés

9. Un châssis conformément à une quelconque des revendications précédentes **caractérisé en ce qu'**il est configuré pour être obtenu par moule à injection.

10. Un châssis conformément aux revendications 1 à 8 **caractérisé en ce qu'**il est configuré pour être obtenu par le moulage à injection d'un matériau plastique ou thermoplastique.
